# NEUE EUROPÄISCHE PATENTSCHRIFT

(11) **EP 1 998 948 B2**
(45) Veröffentlichungstag und Bekanntmachung des Hinweises auf die Entscheidung über den Einspruch: **07.06.2017**
(45) Hinweis auf die Patenterteilung: 03.11.2010
(21) Anmeldenummer: 07726931.4
(22) Anmeldetag: 15.03.2007
(51) Int. Cl.: B29C 44/34, B29B 9/06, B29B 9/16

(54) **VERFAHREN UND VORRICHTUNG ZUR GRANULIERUNG VON TREIBMITTELHALTIGEN POLYMERSCHMELZEN**
METHOD AND DEVICE FOR GRANULATING POLYMER MELTS CONTAINING BLOWING AGENT
PROCEDE ET DISPOSITIF DE GRANULATION D'UNE MASSE FONDUE DE POLYMERE CONTENANT UN AGENT GONFLANT

(30) Priorität: 22.03.2006 EP 06111521
(43) Veröffentlichungstag der Anmeldung: 10.12.2008
(73) Patentinhaber: BASF SE, 67056 Ludwigshafen am Rhein (DE)
(72) Erfinder: SCHMAUS, Paulus, 67071 Ludwigshafen (DE); HEEGER, Michael, 67071 Ludwigshafen (DE); RUCH, Joachim, 67157 Wachenheim (DE); HOLOCH, Jan, 69181 Leimen (DE); RASCH, Christian, 67354 Römerberg (DE)
(74) Vertreter: Kudla, Karsten
(86) Internationale Anmeldenummer: PCT/EP2007/052441
(87) Internationale Veröffentlichungsnummer: WO 2007/107493

(56) Entgegenhaltungen:
- EP-A1- 0 305 862
- EP-A1- 0 924 041
- EP-A2- 0 126 459
- WO-A-03/053651
- DE-A1- 19 813 108
- DE-A1-102004 034 516
- FR-A1- 2 009 426
- JP-A- H1 095 015
- JP-A- H01 168 404
- JP-A- H06 136 176
- JP-A- H07 314 438
- JP-A- H09 221 562
- US-A- 3 092 489
- US-A- 3 564 650
- US-A- 5 052 426
- US-A- 5 605 937
- US-A- 5 609 892
- US-A- 5 895 617
- US-A1- 2002 146 509
- US-A1- 2004 009 254
- US-A1- 2005 154 183
- US-A1- 2005 167 876
- US-B1- 6 340 713
- MACK M. ET AL: 'Trends in underwater pelletizer technology: considering new types of polyolefin resins' POLYOLEFINS XI RETEC Februar 1999, Seiten 215 - 220
- Wikipedia-Artikel "Druckausgleich"
- SCHÄFER, W.: 'Granulieren von Thermoplasten', 1999, VDI-VERLAG GMBH, DÜSSELDORF Seiten 324 - 375
- 'Pelletizing: choosing an appropriate method' PLASTICS ADDITIVES & COMPOUNDING August 2004, Seiten 22 - 26

## Beschreibung

Die Erfindung betrifft ein Verfahren und eine Vorrichtung zur Granulierung von treibmittelhaltigen Polymerschmelzen, wobei die Granulierung in einer Granulierkammer durchgeführt wird, durch die eine Flüssigkeit strömt, deren Druck oberhalb Umgebungsdruck liegt.

Generell wird die Granulierung auch als Unterwassergranulierung bezeichnet, da im Allgemeinen als Flüssigkeit, die die Granulierkammer durchströmt, Wasser eingesetzt wird.

Die Unterwassergranulierung kommt z.B. zum Einsatz, wenn Granulate von treibmittelhaltigen Kunststoffen hergestellt werden. Durch den erhöhten Druck in der Granulierkammer wird sichergestellt, dass der Kunststoff beim Granulieren nicht expandiert. Bei den treibmittelhaltigen Kunststoffen sind im Allgemeinen bereits in der Polymerschmelze, aus der das Granulat gefertigt wird, Treibmittel enthalten. Zusätzlich können in der Polymerschmelze auch Reaktionsreste, z.B. Wasser aus der Polykondensation, enthalten sein.

Ein Verfahren zur Herstellung von treibmittelhaltigem Kunststoffgranulat ist z.B. aus EP-A 0 305 862 bekannt. Hierzu wird ein Polymergrundstoff oder eine Polymermischung einem Extruder zugegeben und im Extruder aufgeschmolzen. Am Extruder befindet sich ein Injektor zur Zugabe eines Treibmittels in die Schmelze. Die Zugabe des Treibmittels erfolgt dabei unter Druck. Die Schmelze mit dem darin gelösten Treibmittel wird in einer Granulierkammer, die von Wasser durchströmt wird, granuliert. Das Granulat wird mit dem Wasserstrom mitgerissen und einem Trockner zugeführt, in welchem das Granulat getrocknet wird. Als geeignete Polymere sind z. B. aromatische Alkenylpolymere wie Polystyrol, Styrol-Maleinsäureanhydrid-Copolymer, Polycarbonat, Polyester, Polyetherimid, Polysulfon und Polyphenylether genannt.

Ein Verfahren zur Herstellung von treibmittelhaltigen Styrolpolymeren mit einem Molekulargewicht M_{W} von mehr als 170000 g/mol ist aus WO-A 03/106544 bekannt. Die Granulierung der Styrolpolymerschmelze erfolgt dabei unter Wasser bei einem Druck im Bereich von 1 bis 10 bar.

Ein weiteres Verfahren, bei welchem treibmittelhaltiges Granulat aus einem thermoplastischen Polymer hergestellt wird, ist aus EP-B 0 126 459 bekannt. Hierbei wird das Polymer zunächst extrudiert, wobei ein Treibmittel zugegeben wird und die extrudierte Polymerschmelze anschließend in einer Flüssigkeit granuliert.

Ein weiteres Verfahren und entsprechende Vorrichtung zur Granulierung von treibmittelhaltigen Polymerschmelzen in einer Granulierkammer, durch die eine Flüssigkeit eines Flüssigkeitskreislaufes strömt, deren Druck oberhalb dem Umgebungsdruck liegt, wobei in einem ersten Schritt die Polymerschmelze in die Granulierkammer eingepresst wird, in einem zweiten Schritt die Polymerschmelze durch eine Schneidevorrichtung in einzelne Granulatkörner geschnitten wird und in einem dritten Schritt die bei der Granulierung erzeugten Granulatkörner mit der Flüssigkeit aus der Granulierkammer ausgetragen und anschließend aus der Flüssigkeit abgetrennt werden, wobei das Verfahren dabei zusätzlich mindestens einen der folgenden Schritte umfasst is uus US-A-5 609 892 bekannt.

Die Herstellung eines porösen Granulates eines Prepolymers auf Basis von (Co)polyestercarbonaten ist in WO 01/10622 beschrieben. Auch hier wird die Granulierung in einer Granulierkammer durchgeführt, die mit Wasser gefüllt ist.

Die Abtrennung des Granulates aus dem Wasser der Unterwassergranulierung erfolgt üblicherweise bei Umgebungsdruck. Hierzu ist es notwendig, das Wasser mit dem darin enthaltenen Granulat zunächst zu entspannen. Dies erfolgt im Allgemeinen in einer Armatur durch Querschnittsverengung, z.B. in einem Quetschventil.

Im Allgemeinen können bei der Granulierung Agglomerate entstehen. Nachteilig bei allen aus dem Stand der Technik bekannten Verfahren ist, dass diese Agglomerate das zur Druckregulierung benutzte Drosselelement verstopfen können. Dies kann zu plötzlichen Druckschwankungen und Durchflussschwankungen in der Granulierkammer führen. Hierdurch wird der Granulierprozess negativ beeinflusst und die Qualität des Granulates beeinträchtigt.

Aufgabe der Erfindung ist es daher, ein Verfahren bereitzustellen, bei welchem Druck- und Durchflussschwankungen in der Granulierkammer, wie sie bei den aus dem Stand der Technik bekannten Verfahren auftreten, vermieden werden.

Gelöst wird die Aufgabe durch ein Verfahren gemäß Anspruch 1.

Vorzugsweise wird die Polymerschmelze kontinuierlich in die Granulierkammer eingepresst. Dies erfolgt im Allgemeinen mit Hilfe eines Extruders oder einer Schmelzepumpe. Erfindungsgemäß wird die Granulierkammer von einer Flüssigkeit durchströmt. Der Druck der Flüssigkeit liegt dabei oberhalb dem Umgebungsdruck. Im Allgemeinen liegt der Druck der Flüssigkeit in der Granulierkammer bei 1 bis 50 bar, vorzugsweise im Bereich von 1,5 bis 30 bar und insbesondere im Bereich von 2 bis 20 bar. Die Temperatur der Flüssigkeit, mit der die Granulierkammer durchströmt wird, liegt vorzugsweise im Bereich von 0 bis 200°C, bevorzugt im Bereich von 5 bis 90°C, insbesondere 10 bis 70°C. Die Maximaltemperatur der Flüssigkeit ist dabei abhängig von dem zu granulierenden Polymer.

Erfindungsgemäß ist die Granulierkammer im Normalbetrieb mit der Flüssigkeit geflutet. Dies führt dazu, dass die Polymerschmelze, die in die Granulierkammer eingepresst wird, in eine flüssige Umgebung gelangt. Ein Vorteil, die Polymerschmelze in eine flüssige Umgebung einzupressen ist, dass Flüssigkeiten im Allgemeinen eine höhere Wärmekapazität und eine höhere Wärmeleitfähigkeit haben als Gase. Dies führt dazu, dass die Polymerschmelze mehr Wärme abgeben kann als bei einer gasförmigen Umgebung und so schneller abkühlt. Bevor die in die Granulierkammer eingepresste Polymerschmelze so weit abgekühlt ist, dass diese erstarrt ist, wird sie in Granulatkörner geschnitten. Das Schneiden erfolgt dabei im Allgemeinen mit einem schnell rotierenden Messer, welches sich gegen eine Düsenplatte abstützt, wobei die Polymerschmelze durch die einzelnen Düsen der Düsenplatte hindurchgedrückt wird.

Nach dem Schneiden kühlen die Granulatkörner in der Flüssigkeit weiter ab. Um einen kontinuierlichen Betrieb zu gewährleisten, werden die Granulatkörner mit der Flüssigkeitsströmung aus der Granulierkammer ausgetragen.

Nach dem Austragen der Granulatkörner aus der Granulierkammer werden diese aus der Flüssigkeit abgetrennt. Die Abtrennung kann dabei entweder durch eine Niederdruckabscheidung bei Umgebungsdruck oder durch eine Hochdruckabscheidung erfolgen. Die Hochdruckabscheidung erfolgt dabei bei im Wesentlichen gleichem Druck wie die Granulierung. Durch den Ausdruck "Im Wesentlichen gleicher Druck" wird der Tatsache Rechnung getragen, dass zwar keine Entspannung der Flüssigkeit innerhalb des Flüssigkeitskreislaufes erfolgt, der Druck der Flüssigkeit aber durch Druckverluste in den Rohrleitungen oder Anlagenteilen sinkt.

Zur Durchführung der Niederdruckabscheidung ist es zunächst erforderlich, die Flüssigkeit mit dem darin enthaltenen Granulat zu entspannen. Das Entspannen der Flüssigkeit erfolgt dabei in einer ersten Ausführungsform in einer als Entspannungsmaschine ausgebildeten Drosselvorrichtung.

Geeignete Entspannungsmaschinen sind Turbinen oder drehende Schleusen. Bevorzugt ändert sich der Durchflussquerschnitt innerhalb der Entspannungsmaschine dabei nicht. Durch einen konstanten Strömungsquerschnitt wird sichergestellt, dass die Entspannungsmaschine nicht durch Agglomerate, die sich beim Granulieren der Kunststoffschmelze bilden können, verstopft.

In einer Ausführungsform umfasst die Entspannungsmaschine mindestens eine Turbine, durch die das Druckniveau der gesamten beladenen Flüssigkeit auf das gewünschte niedrigere Druckniveau abgesenkt wird. Dies erfolgt z. B. durch das Betreiben eines Generators oder einer anderen Vorrichtung, die Energie aus dem System abführt.

Der Druck in der Granulierkammer wird durch Einsatz eines Druckausgleichsbehälters und einer nachgeschalteten Drosselvorrichtung im Wesentlichen konstant gehalten. "Im Wesentlichen konstant" bedeutet im Sinne der vorliegenden Erfindung, dass durch den Druckbehälter sichergestellt wird, dass der Druck in der Granulierkammer vorzugsweise um nicht mehr als maximal 5 bar, bevorzugt 2 bar, insbesondere 1 bar gegenüber dem Betriebsdruck ansteigt oder abfällt. Durch die Vergleichmäßigung des Druckes bleibt auch die Durchflussmenge im Wesentlichen konstant.

Vorteil des Einsatzes eines Druckausgleichsbehälters ist, dass für den Fall, dass die Drosselvorrichtung durch agglomerierte Granulatkörner zugesetzt wird, der ansteigende Druck im Druckausgleichsbehälter aufgefangen wird, so dass die Granulierkammer bei im Wesentlichen konstantem Druck und Durchfluss weiterarbeitet.

Der Druck im Druckausgleichsbehälter wird mittels eines Gases konstant gehalten, wobei zur Erhöhung des Druckes unter Druck stehendes Gas dem Druckausgleichsbehälter zugeführt wird und zur Verringerung des Druckes Gas aus dem Druckausgleichsbehälter abgeführt wird. Als Gase eignen sich z.B. Luft, Stickstoff oder Edelgase. Besonders bevorzugt sind Luft oder Stickstoff.

Erfindungsgemäß ist es bei Einsatz eines Druckausgleichsbehälters, der den Druck in der Granulierkammer im Wesentlichen konstant hält, möglich, als nachgeschaltete Drosselvorrichtung ein Ventil oder einen Hahn mit veränderbarem Querschnitt einzusetzen. Wenn ein Ventil mit veränderbarem Querschnitt eingesetzt wird, ist dieses beispielsweise ein Drehkegelventil. Alternativ kann als Drosselvorrichtung eine Entspannungsmaschine, wie sie oben beschrieben ist, eingesetzt werden.

Der Druckbehälter wirkt zusätzlich als Grobabscheider zum Auffangen von Agglomeraten. Die Trennung erfolgt dabei über eine Sieb- beziehungsweise Filtervorrichtung. Zur Entfernung der groben Agglomerate aus dem Druckbehälter ist an diesem vorzugsweise eine Ausschleusevorrichtung angebracht. Als Ausschleusevorrichtung eignen sich statische oder rotierende Schleusen, z.B. eine Zellradschleuse. Es ist aber auch jede weitere Ausschleusevorrichtung denkbar, mit der Feststoff aus einem unter Druck stehenden Behälter entnommen werden kann.

Das Granulat wird in einem Feststoffabscheider aus der Flüssigkeit abgetrennt. Geeignete Feststoffabscheider sind z.B. Hydrozyklone, Filter oder Zentrifugen. Es kann jedoch auch jeder weitere, dem Fachmann geeignet erscheinende Feststoffabscheider eingesetzt werden.

Das erfindungsgemäße Verfahren wird zur Granulierung von treibmittelhaltigen Polymeren eingesetzt. Damit das treibmittelhaltige Polymer beim Granulieren nicht aufschäumt, erfolgt die Granulierung unter Druck. Hierbei wird das Treibmittel im Polymer eingeschlossen. Bei treibmittelhaltigen Polymeren, die zum Herstellen von Schäumen verwendet werden, kann das Aufschäumen dann in einem weiteren Verarbeitungsschritt erfolgen, wenn das Polymer wieder auf eine Temperatur oberhalb der Erweichungstemperatur erwärmt wird.

Treibmittelhaltige Polymere im Sinne der vorliegenden Erfindung sind z.B. treibmittelhaltige Styrol(co)polymere, treibmittelhaltiges Polycarbonat und treibmittelhaltiges Polyamid, besonders bevorzugt sind treibmittelhaltige Styrol(co)polymere sowie Polymere, die noch ausgasbare Komponenten enthalten können, z.B. Monomere oder Wasser aus dem Herstellungsprozess.

Bevorzugte Styrol(co)polymere sind glasklares Polystyrol (GPPS), schlagzäh modifiziertes Polystyrol (HIPS), anionisch polymerisiertes Polystyrol oder anionisch polymerisiertes schlagzäh modifiziertes Polystyrol (A-IPS), Styrol-α-Methylstyrol-Copolymere, Acrylnitril-Butadien-Styrol-Copolymere (ABS), Styrol-Acrylnitril (SAN), Acrylnitril-Styrol-Acrylester (ASA), Methacrylat-Butadien-Styrol (MBS), Methylmethacrylat-Acrylnitril-Butadien-Styrol (MABS)-Copolymerisate oder Mischungen daraus. Den genannten Styrol(co)polymeren kann zusätzlich Polyphenylenether (PPE) beigemischt sein.

Die genannten Styrol(co)polymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon, in der Regel in Anteilen von insgesamt bis maximal 30 Gew.-%, bevorzugt im Bereich von 1 bis 10 Gew.-%, bezogen auf die Polymerschmelze, abgemischt werden. Des Weiteren sind Mischungen in den genannten Mengenbereichen auch mit z.B. hydrophob modifizierten oder funktionalisierten Polymeren oder Oligomeren, Kautschuken, wie Polyacrylaten oder Polydienen, z.B. Styrol-Butadien-Blockcopolymeren oder biologisch abbaubaren aliphatischen oder aliphatisch/aromatischen Copolyestern, möglich.

Der Styrol(co)polymerschmelze können auch Polymer-Recyclate der genannten thermoplastischen Polymere, insbesondere Styrol(co)polymere und treibmittelhaltige Styrol(co)polymere (EPS), in Mengen zugemischt werden, die deren Eigenschaften nicht wesentlich verschlechtern, in der Regel in Mengen von maximal 30 Gew.-%, insbesondere in Mengen von 1 bis 10 Gew.-%.

Die treibmittelhaltige Styrol(co)polymerschmelze enthält in der Regel ein oder mehrere Treibmittel in homogener Verteilung in einem Anteil von insgesamt 2 bis 10 Gew.-%, bezogen auf die treibmittelhaltige Styrol(co)polymerschmelze. Als Treibmittel eignen sich die üblicherweise in EPS eingesetzten physikalischen Treibmittel, wie aliphatische Kohlenwasserstoffe mit 2 bis 7 Kohlenstoffatomen, Alkohole, Ketone, Ether oder halogenierte Kohlenwasserstoffe. Bevorzugt wird Iso-Butan, n-Butan, Iso-Pentan, n-Pentan eingesetzt.

Zur Verbesserung der Verschäumbarkeit können feinverteilte Innenwassertröpfchen in die Styrol(co)polymermatrix eingebracht werden. Dies kann beispielsweise durch die Zugabe von Wasser in die aufgeschmolzene Styrol(co)polymermatrix erfolgen. Bevorzugt erfolgt die Zugabe vor der Treibmitteldosierung. Eine homogene Verteilung des Wassers kann mittels Knetelementen oder statischen Mischern erreicht werden.

Die zugesetzte Wassermenge wird so gewählt, dass die treibmittelhaltigen Styrol(co)polymere (EPS) ein Expansionsvermögen α, definiert als Schüttdichte vor dem Verschäumen/Schüttdichte nach dem Verschäumen, von höchstens 125 aufweisen. In der Regel sind 0,05 bis 1,5 Gew.-% Wasser, bezogen auf das Styrol(co)polymer, ausreichend.

Treibmittelhaltige Styrol(co)polymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Des Weiteren können der Styrol(co)polymerschmelze Additive, Keimbildner, Weichmacher, Wirkstoffe, z.B. Fungizide, Pestizide, Herbizide, lösliche und unlösliche anorganische und/oder organische Farbstoffe und Pigmente, z. B. IR-Absorber, wie Ruß, Graphit oder Aluminiumpulver, sowie Füllstoffe, z.B. Kreide, Talkum, gemeinsam oder räumlich getrennt zugegeben werden. In der Regel werden die Additive in Mengen im Bereich von 0,01 bis 30, bevorzugt im Bereich von 1 bis 10 Gew.-% zugesetzt. Zur homogenen und mikrodispersen Verteilung der Additive in dem Styrol(co)polymer kann es insbesondere bei polaren Additiven zweckmäßig sein, ein Dispergierhilfsmittel, z.B. Organosilane oder Maleinsäureanhydrid-gepfropfte Styrolpolymere, einzusetzen. Bevorzugte Weichmacher sind Mineralöle, oligomere Styrolpolymere, Phthalate in Mengen von 0,05 bis 10 Gew.-%, bezogen auf das Styrol(co)polymerisat.

Die höhermolekularen Styrol(co)polymerisate erlauben, dass die treibmittelhaltige Styrol(co)polymerschmelze mit einer Temperatur im Bereich von 140 bis 300°C, bevorzugt im Bereich von 160 bis 240°C durch die Düsenplatte gefördert werden kann. Eine Abkühlung bis in den Bereich der Glasübergangstemperatur ist nicht notwendig.

Das erfindungsgemäße Verfahren eignet sich weiterhin zur Herstellung von Granulaten, die noch Leichtsieder enthalten. Hierbei handelt es sich vorzugsweise um Polyamide. Bevorzugte Polyamide werden durch Reaktionen von wässrigen Lösungen von Salzen aus α.ω-Alkandicarbonsäuren mit 6 bis 12 Kohlenstoffatomen und α,ω-Alkandiaminen mit 6 bis 12 Kohlenstoffatomen, insbesondere solchen mit gerader Kohlenstoffkette, gebildet. Geeignete Dicarbonsäuren sind beispielsweise Azelainsäure, Adipinsäure, Korksäure, Sebacinsäure öder Dekandicarbonsäure, Terephthalsäure oder Naphtalindicarbonsäure. Bevorzugte α.ω-Alkandicarbonsäuren haben 6 bis 10 Kohlenstoffatome.

Geeignete Diamine sind beispielsweise Hexamethylendiamin, Octamethylendiamin oder Dekamethylendiamin, bis-(4-Aminocyclohexyl)-methan, bis-(4-Amino-3-methylcyclohexyl)-methan, bis-(4-Aminocyclohexyl)-propan-2,2. Bevorzugte α.ω-Alkandiamine haben 6 bis 10 Kohlenstoffatome.

Zudem ist es möglich, Lactame, insbesondere Caprolactam, zur Herstellung von Mischpolyamiden mit zu verwenden.

Weitere geeignete Polyamide sind solche, die aus einem Gemisch aus mindestens einem Lactam und Wasser sowie gegebenenfalls weiteren Monomereinheiten und/oder üblichen Zusatz- und Füllstoffen unter polyamidbildenden Bedingungen hergestellt werden. Die Herstellung solcher Polyamide ist z. B. aus DE-A 43 21 683 bekannt.

Als Lactam geeignet sind z.B. Caprolactam, Önanthlactam, Capryllactam und Lauryllactam sowie deren Mischungen, bevorzugt ist Caprolactam.

Als weitere Monomereinheiten können beispielsweise Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebacinsäure sowie Terephthalsäure oder Isophthalsäure, Diamine wie C₄ bis C₁₂-Alkyldiamine, insbesondere mit 4 bis 8 Kohlenstoffatomen wie Hexamethylendiamin, Tetramethylendiamin oder Octamethylendiamin, ferner m-Xylylendiamin, bis-(4-aminophenyl)-methan, bis-(4-Aminophenyl)-propan-2,2 oder bis-(4-aminocyclohexyl)-methan, sowie Mischungen von Dicarbonsäuren und Diaminen jeweils für sich in beliebigen Kombinationen, im Verhältnis jedoch vorteilhaft im äquivalenten Verhältnis wie Hexamethylendiammoniumadipat, Hexamethylendiammoniumterephthalat oder Tetramethylendiammoniumadipat, bevorzugt Hexamethylendiammoniumadipat und Hexamethylendiamoniumterephthalat, in Mengen im Bereich von 0 bis 60, vorzugsweise von 10 bis 50 Gew.-%, bezogen auf die Gesamtmenge an Monomeren, eingesetzt. Besondere technische Bedeutung haben Polycaprolactam und Polyamide, die aus Capolactam, Hexamethylendiamin sowie Adipinsäure, Isophthalsäure und/oder Terephthalsäure aufgebaut sind, erlangt.

In einer bevorzugten Ausführungsform werden Caprolactam und Hexamethylendiamoniumadipat ("AH-Salz") eingesetzt, wobei das AH-Salz als wässrige Lösung verwendet wird. Üblicherweise liegt das Molverhältnis von Caprolactam zu AH-Salz im Bereich von 0,05 zu 99,95 bis 20 zu 80, bevorzugt von 5 zu 95 bis 15 zu 85.

Als übliche Zusatz- und Füllstoffe können Pigmente wie Titandioxid, Siliciumdioxid oder Talk, Kettenregler wie aliphatische und aromatische Carbon- und Dicarbonsäuren wie Propionsäure oder Terephthalsäure, Stabilisatoren wie Kupfer(1)halogenide und Alkalimetallhalogenide, Nukleierungsmittel wie Magnesiumsilikat oder Bornitrid, Katalysatoren wie phosphorige Säure sowie Antioxidantien in Mengen im Bereich von 0 bis 5, bevorzugt von 0,05 bis 1 Gew.-%, bezogen auf die Gesamtmenge an Monomeren eingesetzt werden. Die Additive werden in der Regel von dem Granulieren und vor, während oder nach, bevorzugt nach der Polymerisation zugesetzt.

Erfindungsgemäß geeignete Polyamide weisen im Allgemeinen eine Viskositätszahl von 30 bis 120, vorzugsweise 50 bis 90 ml/g auf, bestimmt in einer 0,5 Gew.-% -igen Lösung in 96 Gew.-%- iger Schwefelsäure bei 25 °C gemäß ISO 307.

Polyamide, die durch das erfindungsgemäße Verfahren granuliert werden können, sind z.B. (in Klammern sind die Monomere angegeben):
PA 46 (Tetramethylendiamin, Adipinsäure)
PA 66 (Hexamethylendiamin, Adipinsäure)
PA 69 (Hexamethylendiamin, Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13 Diaminotridecan, Undecandicarbonsäure)
PA MXD6 (m-Xylylendiamin, Adipinsäure)
PA TMDT (Trimethylhexamethylendiamin, Terephthalsäure)

Bevorzugte Polyamide sind Polyhexamethylenadipinsäureamid (PA 66) und Polyhexamethylensebacinsäureamid (PA 610) sowie Copolyamide 6/66, insbesondere mit einem Anteil von 5 bis 50 Gew.-% an Caprolactam-Einheiten. PA 66 und Copolyamide 6/66 sind besonders bevorzugt.

Weiterhin sind auch teilaromatische Copolyamide wie PA 6/6T und PA 66/6T, deren Triamingehalt weniger 0,5, vorzugsweise weniger als 0,3 Gew.-% beträgt, geeignet. Die Herstellung der teilaromatischen Copolyamide mit niedrigem Triamingehalt kann z.B. nach den in EP-A 129 195 und EP-A 129 196 beschriebenen Verfahren erfolgen.

Die Düsenplatte wird vorzugsweise mindestens auf die Temperatur der treibmittelhaltigen Polymerschmelze beheizt. Bevorzugt liegt die Temperatur der Düsenplatte im Bereich von 20 bis 100°C über der Temperatur der treibmittelhaltigen Polymerschmelze. Dadurch werden Polymerablagerungen in den Düsen verhindert und eine störungsfreie Granulierung gewährleistet.

Um marktgängige EPS-Granulatgrößen zu erhalten, sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,6 mm, gezielt einstellen.

In einer Ausführungsform ist der Granulierkammer eine Zerkleinerungsmaschine nachgeschaltet, in der bei der Granulierung entstehende Agglomerate und/oder Granulatkörner, deren Größe eine vorgegebene Maximalgröße überschreitet, zerkleinert werden. Vorzugsweise ist in der Zerkleinerungsmaschine ein schnell rotierendes Messer enthalten, welches die Granulatkörper beim Durchströmen der Zerkleinerungsmaschine zerschneidet.

Zum Anfahren der Granuliervorrichtung wird die Granulierkammer mit unter Druck stehendem Gas geflutet. Hierdurch wird vermieden, dass die Treibmittel enthaltende Polymerschmelze beim Anfahren in der Granulierkammer expandiert. Sobald die Polymerschmelze die Düsenplatte erreicht, an der das Granulat geschnitten wird, wird das Gas in der Granulierkammer durch die Flüssigkeit des Flüssigkeitskreislaufes verdrängt. Dabei steht die Flüssigkeit vorzugsweise nur unter geringfügig höherem Druck als das Gas. Ein Fluten der Granulierkammer vor Beginn des Granulierprozesses ist nicht möglich, da in diesem Falle unter Druck stehende Flüssigkeit in die Düsenplatte eindringt und so die Polymerschmelze erstarrt. Es kommt zu Verstopfungen der Düsenbohrungen.

Wenn der Druck im Flüssigkeitskreislauf über den Druckbehälter konstant gehalten wird, wird vorzugsweise das Gas eingesetzt, mit dem der Druck im Druckbehälter gehalten wird, um die Granulierkammer zum Anfahren unter Druck zu setzen. Sobald die Granulierkammer geflutet wird, bildet sich dann ein Gaspfropfen, der mit der Strömung in den Druckbehälter gelangt.

Die Erfindung umfasst weiterhin eine Vorrichtung zur Granulierung von Polymerschmelzen gemäß Anspruch 8.

Eine Entspannungsmaschine im Sinne der vorliegenden Erfindung ist eine Vorrichtung, bei der der Druck verringert wird, wobei sich der Querschnitt in Strömungsrichtung um maximal 50%, bevorzugt um maximal 20%, insbesondere gar nicht verkleinert. Die Druckreduzierung erfolgt dabei im Allgemeinen dadurch, dass die Flüssigkeit unter gleichzeitiger Abgabe von Arbeit entspannt wird. Geeignete Entspannungsmaschinen sind Turbinen oder drehende Schleusen. Die Turbine, Pumpe oder drehende Schleuse sind vorzugsweise so ausgebildet, dass sich der Strömungsquerschnitt innerhalb der Vorrichtung nicht ändert.

Wenn der Granulierkammer ein Druckausgleichsbehälter nachgeschaltet ist, um den Druck im Flüssigkeitskreislauf im Wesentlichen konstant zu halten, eignet sich als Drosselvorrichtung auch eine Drosselarmatur. Als Drosselarmatur eignen sich alle Ventile, bei denen der Druck der Flüssigkeit auf das niedrigere Druckniveau reduziert wird. Geeignete Armaturen sind z.B. Schieber, Regelventile, Drehkegelventile oder Quetschventile. Besonders bevorzugt als Druckhalteventil ist ein Drehkegelventil.

Erfindungsgemäß erfüllt die Drosselvorrichtung dabei zwei Aufgaben. Zum Einen wird der Druck der Flüssigkeit in der Granulierkammer durch Einstellung der Drosselvorrichtung konstant gehalten, zum Anderen wird die Granulat enthaltende Flüssigkeit in der Drosselvorrichtung auf Umgebungsdruck entspannt, um anschließend das Granulat aus der Flüssigkeit bei Umgebungsdruck abtrennen zu können.

Die Abtrennung des Granulates erfolgt im Allgemeinen in einem Feststoffabscheider. Dabei erfolgt die Abtrennung nach dem Entspannen der Granulat enthaltenden Flüssigkeit auf Umgebungsdruck.

Zur Feststoffabscheidung eignet sich jeder dem Fachmann bekannte Feststoffabscheider zur Abtrennung des treibmittelhaltigen Granulates. Bevorzugte Feststoffabscheider sind Hydrozyklone, Zentrifugen, Filter oder Siebe. Als Filter eignet sich jeder Filter, der eine Porengröße aufweist, die kleiner ist als der Durchmesser der kleinsten in der Flüssigkeit enthaltenen Granulatkörner.

Bei Einsatz des Druckausgleichsbehälters, um den Druck in der Vorrichtung zur Granulierung von Polymerschmelzen konstant zu halten, erfolgt der Druckausgleich mit Hilfe eines Gases, welches gegenüber der Flüssigkeit und dem Granulat inert ist. Hierzu münden in den Druckausgleichsbehälter eine Druckgasleitung und eine Abgasleitung, die jeweils ein Regelventil enthalten, über das der Druck im Druckausgleichsbehälter konstant gehalten wird. Sobald der Druck im Flüssigkeitskreislauf und damit im Druckbehälter ansteigt, öffnet das Regelventil in der Abgasleitung und Gas kann aus dem Druckausgleichsbehälter ausströmen. Hierdurch wird vermieden, dass sich der Druck im Flüssigkeitskreislauf erhöht. Sobald der Druck andererseits wieder absinkt, wird das Regelventil in der Druckgasleitung geöffnet und unter Druck stehendes Gas kann in den Druckbehälter nachströmen, bis wieder der Betriebsdruck erreicht ist. Neben dem Druckabbau hat die regelbare Drosselvorrichtung die Funktion, den Flüssigkeitsstand im Druckausgleichsbehälter möglichst konstant zu halten.

Um zu gewährleisten, dass zum Anfahren des Granulierprozesses die Granulierkammer mit unter Druck stehendem Gas geflutet ist, zweigt von der Druckgasleitung eine Leitung mit einem Absperrventil ab, die im Bereich der Granulierkammer in den Flüssigkeitskreislauf mündet. Bei geöffnetem Absperrventil kann das Gas in die Granulierkammer einströmen. Sobald die Granulierkammer mit Gas geflutet ist und in der Granulierkammer Betriebsdruck herrscht, wird das Absperrventil verschlossen. Sobald die Polymerschmelze die Granulierkammer erreicht und in der Granulierkammer der Schneidvorgang beginnen kann, wird diese mit der Flüssigkeit geflutet. Das Gas strömt dann als Gaspfropfen in der Flüssigkeitsleitung in den Druckausgleichsbehälter. Hier wird das Gas wieder aus dem Flüssigkeitskreislauf abgetrennt.

In einer bevorzugten Ausführungsform enthält der Druckausgleichsbehälter eine Abscheidevorrichtung und gegebenenfalls eine Ausschleusevorrichtung für Feststoffteilchen. In dieser Abscheidevorrichtung werden im Flüssigkeitskreislauf enthaltene Agglomerate aufgefangen und abgetrennt. Eine bevorzugte Abscheidevorrichtung ist z. B. ein Siebeinsatz oder eine mechanische Abreinigungsvorrichtung. Bei Verwendung eines Siebeinsatzes ist dieser so ausgebildet, dass im Siebeinsatz Öffnungen enthalten sind, die Granulatkörner, deren Größe eine gewünschte maximale Granulatgröße nicht überschreitet, passieren können und größere Granulatkörner abgefangen werden.

Im Folgenden wird die Erfindung anhand einer Zeichnung näher beschrieben. Darin zeigt:
- Figur 1: ein Verfahrensfließbild einer Vorrichtung zur Granulierung,
- Figur 2.1: ein Verfahrensfließbild einer weiteren Vorrichtung,
- Figur 2.2: ein Verfahrensfließbild einer erfindungsgemäßen Vorrichtung in einer ersten Ausführungsform,
- Figur 3: ein Verfahrensfließbild einer weiteren Vorrichtung,
- Figur 4: ein Verfahrensfließbild der erfindungsgemäßen Vorrichtung in einer zweiten Ausführungsform,
- Figuren 5.1 bis 5.4: Druckausgleichsbehälter in unterschiedlichen Ausführungsformen.

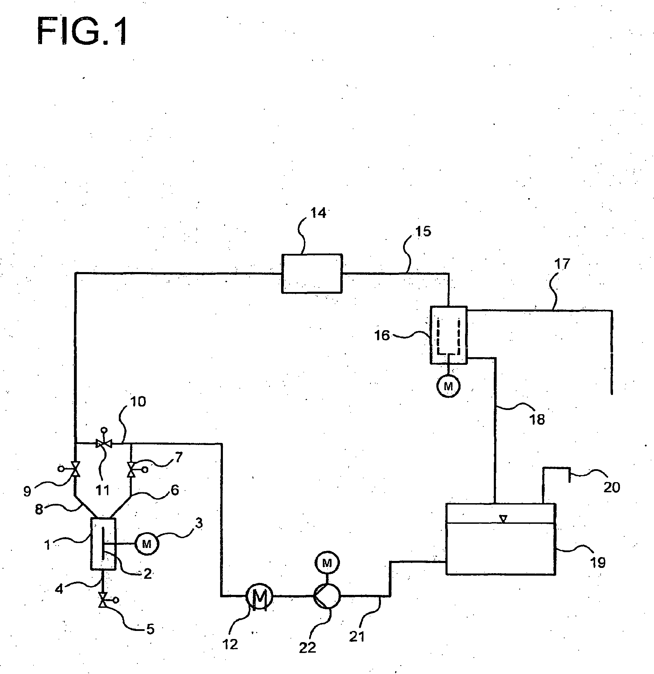

Figur 1 zeigt ein Verfahrensfließbild einer Vorrichtung zur Granulierung. Einer Granulierkammer 1 wird eine treibmittelhaltige Polymerschmelze zugeführt. In der Granulierkammer 1 wird die Polymerschmelze in Granulatkörner geschnitten. Hierzu ist in der Granulierkammer 1 ein rotierendes Messer 2 aufgenommen. Das rotierende Messer 2 wird mit Hilfe eines Motors 3 angetrieben. Das Messer 2 wird vorzugsweise auf einer hier nicht dargestellten Düsenplatte geführt, in der eine Vielzahl von Bohrungen ausgebildet ist. Die Polymerschmelze wird durch die Bohrungen der Düsenplatte gedrückt und durch das rotierende Messer 2 in Granulatkörner geschnitten. Über eine Leitung 4, in der ein Absperrventil 5 aufgenommen ist, kann die Granulierkammer 1 entleert werden. Über eine zweite Leitung 6, in der ein zweites Absperrventil 7 aufgenommen ist, wird der Granulierkammer 1 beim Anfahren des Prozesses Flüssigkeit zugeführt. Über eine dritte Leitung 8, in der ein drittes Absperrventil 9 aufgenommen ist, wird die Flüssigkeit, die das Treibmittel enthaltende Granulat enthält, aus der Granulierkammer 1 abgezogen. Die zweite Leitung 6 und die dritte Leitung 8 sind über eine vierte Leitung 10, in der ein viertes Absperrventil 11 aufgenommen ist, miteinander verbunden. Vor dem Anfahren des Prozesses ist zunächst das zweite Absperrventil 7 verschlossen und das vierte Absperrventil 11 geöffnet. Die Flüssigkeit strömt somit zunächst nicht über die Granulierkammer 1.

Über die Leitung 8 wird die Granulat enthaltende Flüssigkeit einer Drosselvorrichtung 14 zugeführt. In der Drosselvorrichtung 14 wird die Granulat enthaltende Flüssigkeit auf Umgebungsdruck entspannt. Die Drosselvorrichtung 14 ist dabei vorzugsweise so ausgebildet, dass sich der Querschnitt darin nicht ändert. Vorzugsweise ist die Drosselvorrichtung 14 eine Entspannungsmaschine. Geeignet als Entspannungsmaschine ist z. B. eine Turbine, eine Pumpe oder eine drehende Schleuse.

Die entspannte, Granulat enthaltende Flüssigkeit wird über eine Zuleitung 15 einer Abscheidevorrichtung 16 zugeführt. Als Abscheidevorrichtung eignet sich z.B. ein Hydrozyklon, eine Zentrifuge oder ein Filter. In Figur 1 ist als Abscheidevorrichtung 16 eine Zentrifuge dargestellt. Aus der Abscheidevorrichtung 16 wird das Granulat über eine Entnahmeleitung 17 abgeführt. Die Flüssigkeit wird über eine Leitung 18 einem Flüssigkeitsbehälter 19 zugeführt. Der Flüssigkeitsbehälter 19 enthält einen Überlauf 20 als Druckausgleich. Aus dem Flüssigkeitsbehälter 19 gelangt die Flüssigkeit über eine Zufuhrleitung 21, in der eine Pumpe 22 aufgenommen ist, und die zweite Leitung 6 erneut in die Granulierkammer 1. Die Pumpe 22 ist dabei so ausgelegt, dass in der Pumpe der Druck der Flüssigkeit vom Umgebungsdruck auf den Betriebsdruck der Granulierkammer 1 erhöht wird. Um die Temperatur im Flüssigkeitskreislauf einstellen zu können, ist der Pumpe 22 in der hier dargestellten Ausführungsform ein Wärmetauscher 12 nachgeschaltet.

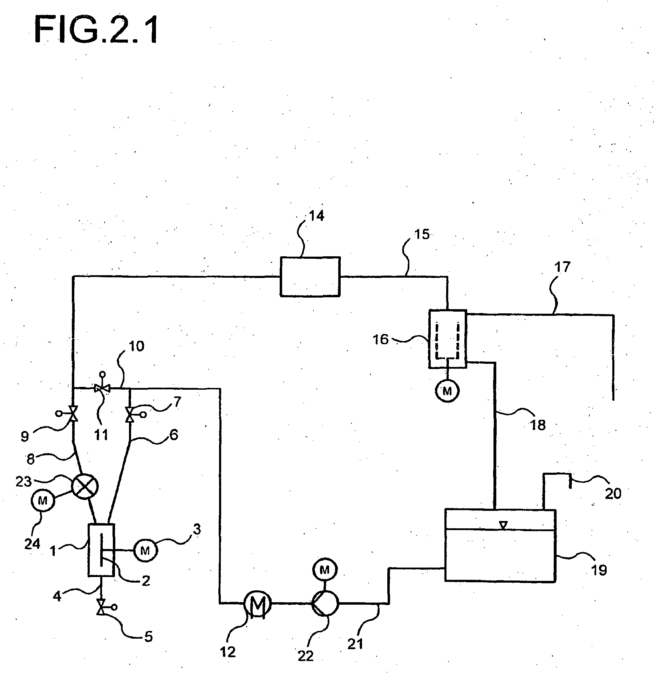

Figur 2.1 zeigt ein Verfahrensfließbild einer weiteren Vorrichtung zur Granulierung. Die zweite in Figur 2.1 dargestellte Ausführungsform unterscheidet sich von der in Figur 1 dargestellten Ausführungsform dadurch, dass der Granulierkammer 1 eine weitere Zerkleinerungsmaschine 23 nachgeschaltet ist. Die Zerkleinerungsmaschine 23 enthält ein rotierendes Messer, welches mit einem Motor 24 angetrieben wird.

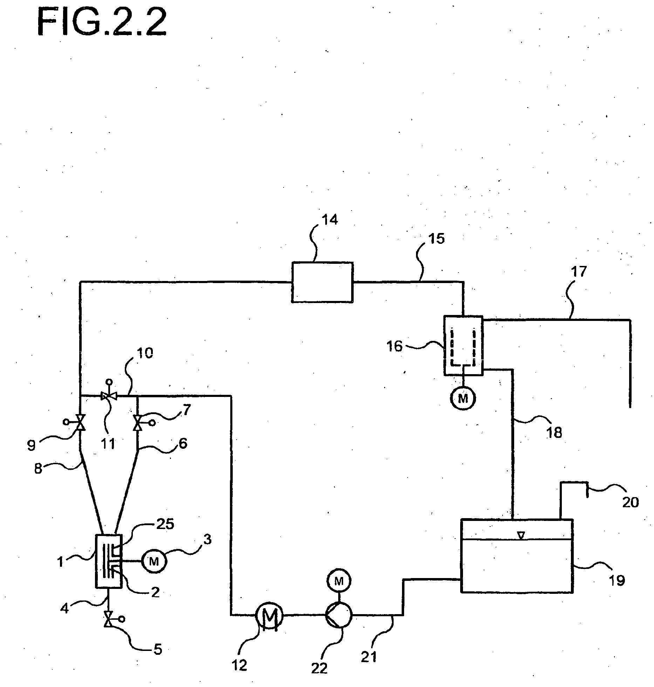

Anstelle der weiteren Zerkleinerungsmaschine 23 ist es auch möglich, wie in Figur 2.2 dargestellt, in der Granulierkammer 1 neben dem rotierenden Messer 2 eine weitere Zerkleinerungseinheit 25 aufzunehmen. Durch diese Zerkleinerungseinheit 25 wird die Bildung von Agglomeraten reduziert.

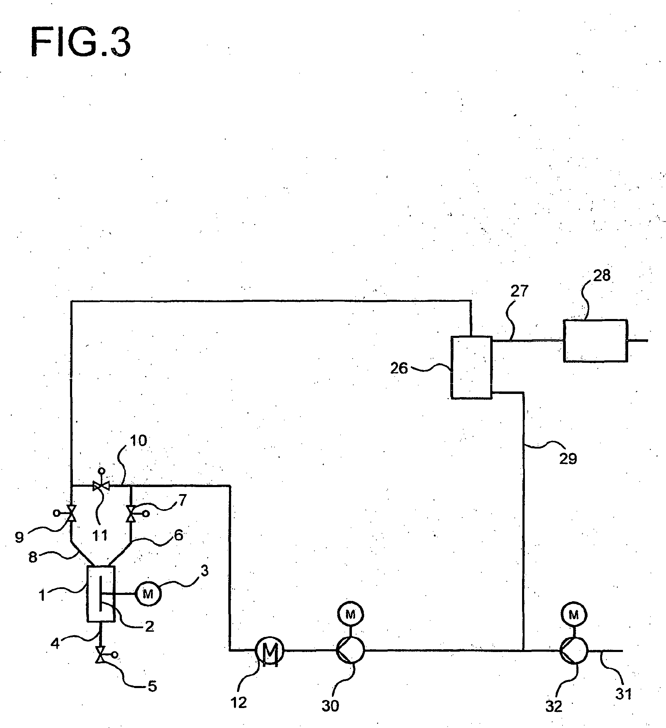

Figur 3 zeigt ein Verfahrensfließbild einer weiteren Vorrichtung zur Granulierung.

Bei der in Figur 3 dargestellten Vorrichtung wird die Flüssigkeit, die das Granulat enthält, vor der Abscheidung des Granulates nicht entspannt. Daher enthält die in Figur 3. dargestellte Vorrichtung keine Drosselvorrichtung 14. Die unter Druck stehende, das Granulat enthaltende Flüssigkeit wird einer Abscheidevorrichtung 26 zugeführt. In der Abscheidevorrichtung 26 wird das Granulat von der Flüssigkeit bei Betriebsdruck abgetrennt. Der Betriebsdruck ist dabei im Wesentlichen der gleiche Druck wie der Druck, der in der Granulierkammer 1 herrscht. Das Granulat wird aus der Abscheidevorrichtung 26 über eine Entnahmeleitung 27 einer Drosselvorrichtung 28 zugeführt. In der Drosselvorrichtung 28 wird der das Granulat enthaltende Strom auf Umgebungsdruck entspannt.

Die unter Betriebsdruck stehende Flüssigkeit wird nach Entfernung des Granulates über eine Kreisleitung 29, in der eine Umwälzpumpe 30 aufgenommen ist, und über die zweite Leitung 6 erneut der Granulierkammer 1 zugeführt. Mit Hilfe der Umwälzpumpe 30 wird die Flüssigkeit im Kreislauf geführt. Gleichzeitig wird über die Umwälzpumpe 30 der in den Rohrleitungen und Anlagenteilen entstehende Druckverlust ausgeglichen. Aus dem Flüssigkeitskreislauf entweichende Flüssigkeit wird über eine Zufuhrleitung 31, in der eine Pumpe 32 enthalten ist, ausgeglichen. Mit Hilfe der Pumpe 32 wird die Flüssigkeit, bevor sie in die Kreisleitung 29 zugeführt wird, auf Betriebsdruck erhöht.

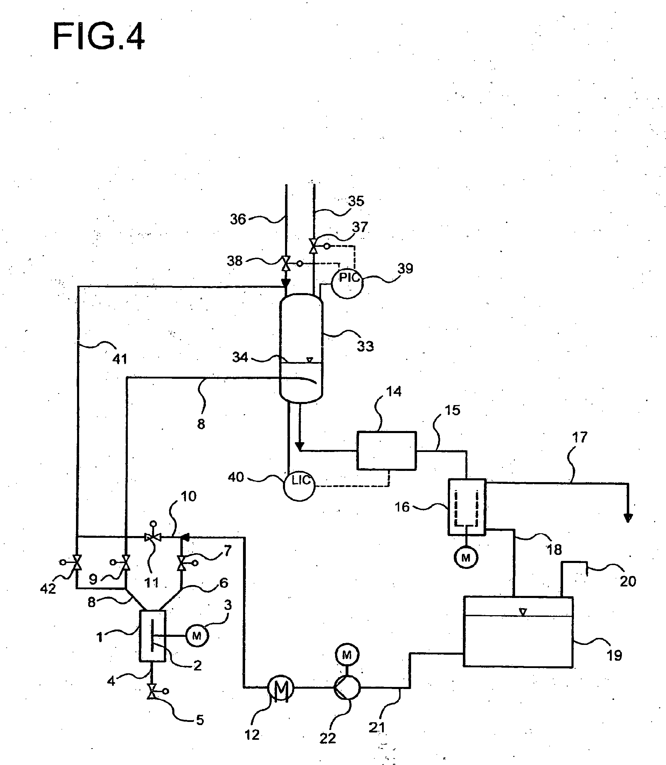

In Figur 4 ist ein Verfahrensfließbild einer zweiten Ausführungsform der erfindungsgemäßen Vorrichtung dargestellt.

Bei der in Figur 4 dargestellten Ausführungsform ist zwischen die Granulierkammer 1 und die Drosselvorrichtung 14 ein Druckausgleichsbehälter 33 aufgenommen. Durch den Druckausgleichsbehälter wird über die dritte Leitung 8 der Druck in der Granulierkammer 1 konstant gehalten. Sollte z.B. durch agglomerierte Granulatkörner die Drosselvorrichtung 14 verstopfen, steigt der Flüssigkeitspegel 34 im Druckausgleichsbehälter 33. Hierdurch wird Gas, welches sich oberhalb der Flüssigkeit im Druckausgleichsbehälter 33 befindet, aus dem Druckausgleichsbehälter 33 über eine Abgasleitung 35 abgeführt. Sobald der Druck im Druckausgleichsbehälter 33 durch Absinken des Flüssigkeitspegels 34 sinkt, wird über eine Druckgasleitung 36 dem Druckausgleichsbehälter 33 so viel Gas zugeführt, dass der Druck wieder auf Betriebsdruck steigt, gleichzeitig wird der Durchflussquerschnitt der Drosselvorrichtung 14 über eine Flüssigkeitsstandsregelung 40 so geändert, dass sich im Druckausgleichsbehälter 33 wieder der vorgegebene Flüssigkeitsstand einstellt. Hierdurch wird der Druck und Durchfluss in der Granulierkammer 1 im Wesentlichen konstant gehalten. Durch den im Wesentlichen konstanten Druck und Durchfluss in der Granulierkammer 1 wird vermieden, dass der Granuliervorgang gestört wird.

Bei der in Figur 4 dargestellten Ausführungsform kann als Drosselvorrichtung 14 eine Entspannungsmaschine oder eine Drosselarmatur, wie sie aus dem Stand der Technik bekannt ist, eingesetzt werden. Eine geeignete Drosselarmatur ist z.B. ein Quetschventil.

Um den Druck im Druckausgleichsbehälter 33 konstant zu halten, sind in der Abgasleitung 35 ein erstes Regelventil 37 und in der Druckgasleitung 36 ein zweites Regelventil 38 aufgenommen. Die Regelung erfolgt über eine Druckregelung 39. Um einen konstanten Flüssigkeitspegel 34 im Druckausgleichsbehälter 33 zu behalten, ist zusätzlich eine Füllstandsregelung 40 vorgesehen. Über die Füllstandsregelung 40 wird die Drosselvorrichtung 14 angesteuert. In diesem Fall ist die Drosselvorrichtung 14 vorzugsweise so ausgebildet, dass die Flüssigkeitsströmung damit gesteuert werden kann. Sobald der Flüssigkeitspegel 34 im Druckausgleichsbehälter 33 steigt, ist es erforderlich, dass eine größere Flüssigkeitsmenge über die Drosselvorrichtung 14 aus dem Druckausgleichsbehälter 33 ausströmen kann. Wenn der Flüssigkeitspegel 34 unter einen kritischen Wert absinkt, muss die Drosselvorrichtung 14 eine geringere Menge an Flüssigkeit aus dem Druckausgleichsbehälter 33 ausströmen lassen, damit der Flüssigkeitspegel 34 wieder ansteigt. Als Drosselvorrichtung sind in diesem Fall besonders Regelventile geeignet.

Um die Granulierkammer 1 zum Anfahren des Granulierprozesses mit Gas zu fluten, zweigt von der Druckgasleitung 36 nach dem Regelventil 38 eine Gasleitung 41 ab. Die Gasleitung kann auch aus dem Druckausgleichsbehälter 33 oder den anderen mit diesem im Gasraum verbundenen Leitungen 35 abzweigen. Die Gasleitung 41 mündet entweder direkt in die Granulierkammer 1 oder wie in Figur 4 dargestellt zwischen dem dritten Absperrventil 9 und zweiten Absperrventil 7 und der Granulierkammer 1 in die dritte Leitung 8. Bei verschlossenem dritten Absperrventil 9 kann so die Granulierkammer 1 mit Gas geflutet werden. Sobald der Betriebsdruck in der Granulierkammer 1 erreicht ist, wird ein Absperrventil 42, welches in der Gasleitung 41 aufgenommen ist, verschlossen. Mit Beginn des Granulierprozesses wird zu dem Zeitpunkt, zu dem die Polymerschmelze die Granulierkammer 1 erreicht, das vierte Absperrventil 11 verschlossen, das zweite Absperrventil 7 und das dritte Absperrventil 9 geöffnet, so dass Flüssigkeit aus dem Flüssigkeitsbehälter 19 über die Zufuhrleitung 21 in die Granulierkammer 1 strömen kann. Durch die einströmende Flüssigkeit wird das in der Granulierkammer 1 enthaltene Gas über die dritte Leitung 8 als Gaspfropfen in den Druckausgleichsbehälter 33 geschoben. Im Druckausgleichsbehälter 33 trennt sich das Gas aus der Flüssigkeit ab. Im weiteren Betrieb wird über die dritte Leitung 8, die Zuleitung 15, die Zufuhrleitung 21 und die zweite Leitung 6 ein Flüssigkeitskreislauf betrieben. Innerhalb dieses Flüssigkeitskreislaufes wird die Flüssigkeit in der Drosselvorrichtung 14 auf Umgebungsdruck gedrosselt und mittels der Pumpe 22 wieder auf Betriebsdruck komprimiert. Die Abtrennung des Granulates erfolgt in der Abscheidevorrichtung 16.

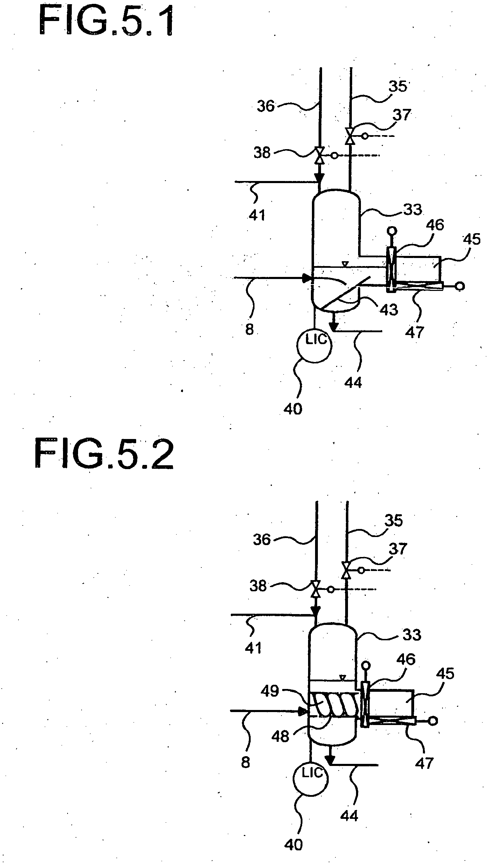

In Figur 5.1 ist ein Druckausgleichsbehälter 33 in einer zweiten Ausführungsform dargestellt.

Zur Abtrennung von Agglomeraten und Granulatkörnern, deren Größe eine Mindestgröße überschreitet, ist im Druckausgleichsbehälter 33 ein Siebeinsatz 43 aufgenommen. Hierzu sind im Siebeinsatz 43 Öffnungen ausgebildet, die Agglomerate und große Granulatteilchen zurückhalten. Granulatkörner, deren Größe innerhalb des gewünschten Bereiches liegt, können den Siebeinsatz 43 passieren und werden über eine Verbindungsleitung 44 zur Drosselvorrichtung 14 geführt. Die abgetrennten Agglomerate und Granulatkörner können über eine Ausschteusevorrichtung 45 aus dem Druckausgleichsbehälter 33 entfernt werden. Die Ausschleusevorrichtung 45 umfasst zwei Klappen 46, 47, die unabhängig voneinander geöffnet werden können. Um zu vermeiden, dass der Druck im Druckausgleichsbehälter 33 absinkt, wird zum Entfernen der Agglomerate und großen Granulatkörner zurächst die erste Klappe 46 geöffnet und die großen Granulatkörner und die Agglomerate können in die Ausschleusevorrichtung 45 gelangen. Anschließend wird die erste Klappe 46 geschlossen und die zweite Klappe 47 geöffnet, um die Agglomerate und großen Granulatkörner aus der Ausschleusevorrichtung 45 zu entfernen.

Bei der in Figur 5.2 dargestellten Ausführungsform des Druckausgleichsbehälters 33 ist in diesem ein Siebeinsatz 48 aufgenommen, über den die großen Granulatkörner und Agglomerate abgetrennt werden. Innerhalb des Siebeinsatzes 48 befinden sich Leitbleche 49, die die Granulat enthaltende Flüssigkeit aus der dritten Leitung 8, die in den Druckausgleichsbehälter 33 mündet, in Richtung des Siebeinsatzes 48 leiten. Die Ausschleusung der großen Granulatkörner und der Agglomerate erfolgt wieder über die Ausschleusevorrichtung 45.

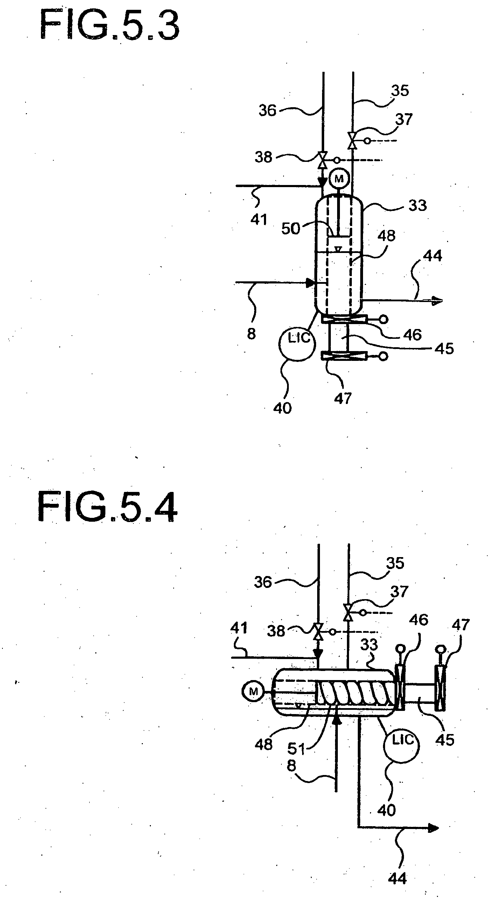

Bei der in Figur 5.3 dargestellten Ausführungsform des Druckausgleichsbehälters 33 wird die Granulat enthaltende Flüssigkeit 8 ins Innere des Siebeinsatzes 48 geleitet. Im Siebeinsatz 48 befindet sich eine Kolbenplatte 50, die in Richtung der Ausschleusevorrichtung 45 bewegbar ist. Mit Hilfe der Kolbenplatte 50 werden die großen Granulatkörner und die Agglomerate, die den Siebeinsatz 48 nicht passieren können, in Richtung der Ausschleusevorrichtung 45 bewegt. Die kleineren Granulatkörner und die Flüssigkeit werden aus dem Siebeinsatz 48 hinausgedrückt. Über die Ausschleusevorrichtung 45 können dann die großen Granulatkörner und die Agglomerate aus dem Druckausgleichsbehälter 33 entfernt werden.

Bei der in Figur 5.4 dargestellten Ausführungsform des Druckausgleichsbehälters 33 ist innerhalb des Siebeinsatzes 48 eine rotierbare Schnecke 51 aufgenommen. Mit Hilfe der Schnecke 51 werden die groben Granulatkörner und die Agglomerate in Richtung der Ausschleusevorrichtung 45 geleitet. Über die Ausschleusevorrichtung 45 können die groben Granulatkörner und die Agglomerate aus dem Druckausgleichsbehälter 33 entfernt werden. Die Granulatkörner, deren Größe so bemessen ist, dass diese den Siebeinsatz 48 passieren können, werden mit der Flüssigkeit über die Verbindungsleitung 44 in Richtung der Drosselvorrichtung 14 geführt.

Neben den in den Figuren 4 sowie 5.1 bis 5.4 dargestellten Ausführungsformen des Druckausgleichsbehälters 33 ist auch jede weitere Ausführungsform des Druckausgleichsbehälters 33 möglich, mit der die groben Granulatkörner und Agglomerate aus der Flüssigkeit entfernt werden können.

### Bezugszeichenliste

- 1: Granulierkammer
- 2: rotierendes Messer
- 3: Motor
- 4: erste Leitung
- 5: erstes Absperrventil
- 6: zweite Leitung
- 7: zweites Absperrventil
- 8: dritte Leitung
- 9: drittes Absperrventil
- 10: vierte Leitung
- 11: viertes Absperrventil
- 12: Wärmetauscher

- 14: Entspannungsmaschine
- 15: Zuleitung
- 16: Abscheidevorrichtung
- 17: Entnahmeleitung
- 18: Leitung
- 19: Flüssigkeitsbehälter
- 20: Überlauf
- 21: Zufuhrleitung
- 22: Pumpe
- 23: Zerkleinerungsmaschine
- 24: Motor
- 25: Zerkleinerungseinheit
- 26: Abscheidevorrichtung
- 27: Entnahmeleitung
- 28: Drosselvorrichtung
- 29: Kreisleitung
- 30: Umwälzpumpe
- 31: Zufuhrleitung
- 32: Pumpe
- 33: Druckausgleichsbehälter
- 34: Flüssigkeitspegel
- 35: Abgasleitung
- 36: Druckgasleitung

- 37: erstes Regelventil
- 38: zweites Regelventil
- 39: Temperaturregelung
- 40: Füllstandsregelung
- 41: Gasleitung
- 42: Gasabsperrventil
- 43: Siebeinsatz
- 44: Verbindungsleitung
- 45: Ausschleusevorrichtung
- 46: erste Klappe
- 47: zweite Klappe
- 48: Siebeinsatz
- 49: Leitbleche
- 50: Kolbenplatte
- 51: Schnecke

## Patentansprüche

1. Verfahren zur Granulierung von treibmittelhaltigen Polymerschmelzen in einer Granulierkammer, durch die eine Flüssigkeit eines Flüssigkeitskreislaufes strömt, deren Druck oberhalb dem Umgebungsdruck liegt, wobei die Granulierkammer mit der Flüssigkeit geflutet ist und wobei in einem ersten Schritt die Polymerschmelze in die Granulierkammer eingepresst wird, in einem zweiten Schritt die Polymerschmelze durch eine Schneidevorrichtung in einzelne Granulatkörner geschnitten wird und in einem dritten Schritt die bei der Granulierung erzeugten Granulatkörner mit der Flüssigkeit aus der Granulierkammer ausgetragen und anschließend aus der Flüssigkeit abgetrennt werden, wobei das Verfahren dabei zusätzlich folgenden Schritt umfasst:
(a) Zerkleinern von bei der Granulierung entstehenden Agglomeraten oder Granulatkörnern, die eine vorgegebene Maximalgröße überschreiten, in einer der Granulierkammer nachgeschalteten Zerkleinerungsmaschine oder einer der Schneidevorrichtung nachgeschalteten Zerkleinerungseinheit in der Granulierkammer,
(c) Entspannen der Flüssigkeit in einer Drosselvorrichtung auf das niedrigere Druckniveau, wobei der Drosselvorrichtung ein Druckausgleichsbehälter vorgeschaltet ist, der den Druck und den Durchfluss in der Granulierkammer im Wesentlichen konstant hält,
wobei die in Schritt (c) eingesetzte Drosselvorrichtung auch eine Entspannungsmaschine oder eine Drosselarmatur sein kann, wobei die Entspannungsmaschine eine drehende Schleuse ist oder mindestens eine Turbine umfasst und wobei zum Anfahren des Prozesses die Granulierkammer über eine Druckausgleichsleitung zum Druckausgleichsbehälter mit Gas bei Prozessdruck beaufschlagt wird.

2. Verfahren nach Anspruch 1, **dadurch gekennzeichnet, dass** das Abtrennen der Granulatkörner aus der Flüssigkeit in einem Feststoffabscheider erfolgt.

3. Verfahren nach Anspruch 2, **dadurch gekennzeichnet, dass** der Feststoffabscheiderein Hydrozyklon, ein Filter oder eine Zentrifuge ist.

4. Verfahren nach Anspruch 1, **dadurch gekennzeichnet, dass** der Druck im Druckausgleichsbehälter über ein Gas konstant gehalten wird, wobei zur Erhöhung des Druckes unter Druck stehendes Gas dem Druckausgleichsbehälter zugeführt wird und zur Verringerung des Druckes Gas aus dem Druckausgleichsbehälter abgeführt wird.

5. Verfahren nach Anspruch 4, **dadurch gekennzeichnet, dass** durch die dem Druckausgleichsbehälter nachgeschaltete Drosselvorrichtung der Flüssigkeitsstand im Druckausgleichsbehälter eingestellt wird.

6. Verfahren nach einem der Ansprüche 1 bis 5, **dadurch gekennzeichnet, dass** der Druck in der Granulierkammer im Bereich von 1 bis 50 bar liegt.

7. Verfahren nach einem der Ansprüche 1 bis 6, **dadurch gekennzeichnet, dass** bei der Granulierung entstehende Agglomerate und/oder Granulatkörner, deren Größe eine vorgegebene Maximalgröße überschreitet, nach Verlassen der Granulierkammer in einer Zerkleinerungsmaschine zerkleinert werden.

8. Vorrichtung zur Granulierung von treibmittelhaltigen Polymerschmelzen, eine Granulierkammer, die mit einer Flüssigkeit geflutet ist, deren Druck oberhalb dem Umgebungsdruck liegt, und eine Druckpumpe zur Erzeugung des erforderlichen Druckes umfassend, **dadurch gekennzeichnet, dass** nachfolgendes Merkmal gewährleistet ist:
(a) oder einer Schneidevorrichtung innerhalb der Granulierkammer ist eine Zerkleinerungseinheit nachgeschaltet,
(c) der Granulierkammer sind ein Druckausgleichsbehälter und daran anschließend eine Drosselvorrichtung zur Einstellung des Gegendruckes nachgeschaltet, wobei die Entfernung des Granulates in einem Feststoffabscheider erfolgt, der der Drosselvorrichtung nachgeschaltet ist, wobei in den Druckausgleichsbehälter eine Druckgasleitung und eine Abgasleitung münden, wobei Druckgasleitung und die Abgasleitung jeweils ein Regelventil oder die Druckgasleitung einen Druckminderer und die Abgasleitungen ein Druckhalteventil enthalten, über die der Druck im Druckausgleichsbehälter im Wesentlichen konstant gehalten wird und wobei von der Druckgasleitung oder dem Druckausgleichsbehälter eine Leitung mit einem Absperrventil abzweigt, die in die Granulierkammer oder die damit verbundenen Leitungen mündet.

9. Vorrichtung nach Anspruch 8, **dadurch gekennzeichnet, dass** der Feststoffabscheider ein Hydrozyklon, eine Zentrifuge oder ein Filter ist.

10. Vorrichtung nach Anspruch 8, **dadurch gekennzeichnet, dass** die Ausschleusung des Feststoffes aus dem Feststoffabscheider des Merkmals (c) über eine Kammerschleuse oder Zellradschleuse erfolgt.

11. Vorrichtung nach Anspruch 8, **dadurch gekennzeichnet, dass** der Druckausgleichsbehälter eine Abscheidevorrichtung für Feststoffteilchen enthält.

12. Vorrichtung nach Anspruch 11, **dadurch gekennzeichnet, dass** die Abscheidevorrichtung ein Siebeinsatz ist.

13. Vorrichtung nach Anspruch 11, **dadurch gekennzeichnet, dass** die Abscheidevorrichtung eine Abreinigungsvorrichtung und Ausschleusevorrichtung enthält.

## Claims

1. A process for pelletizing polymer melts comprising blowing agent in a pelletizing chamber through which a liquid of a liquid circuit flows, its pressure being above the ambient pressure, where the pelletizing chamber has been flooded with the liquid, and where, in a first step, the polymer melt is injected into the pelletizing chamber, in a second step the polymer melt is cut via a cutting apparatus into individual pellets and, in a third step, the pellets produced in the pelletizing process are discharged with the liquid from the pelletizing chamber and are then isolated from the liquid, where this process also comprises at least one of the following steps:
(a) comminution of agglomerates produced during the pelletizing process or of pellets which exceed a prescribed maximum size, in a comminuting machine downstream of the pelletizing chamber or in a comminuting unit downstream of the cutting apparatus, in the pelletizing chamber,
(c) depressurization of the liquid in a throttle apparatus to the lower pressure level, where there is, upstream of the throttle apparatus, a pressure-equalizing container which keeps the pressure and the flow through the pelletizing chamber in essence constant,
where the throttle apparatus used in step (c) can also be a depressurizing machine or a throttle valve, where the depressurizing machine comprises a rotating sluice valve or at least one turbine and where for start-up of the process, the pelletizing chamber is treated with gas at process pressure by way of a pressure-equalizing line to the pressure-equalizing container.

2. The process according to claim 1, wherein the pellets are isolated from the liquid in a solids separator.

3. The process according to claim 2, wherein the solids separator is a hydrocyclone, a filter, or a centrifuge.

4. The process according to claim 1, wherein the pressure in the pressure-equalizing container is kept constant by way of a gas, where, in order to increase the pressure, gas under pressure is introduced into the pressure-equalizing container and, in order to reduce the pressure, gas is dissipated from the pressure-equalizing container.

5. The process according to claim 4, wherein the liquid level in the pressure-equalizing container is adjusted via the throttle apparatus which is downstream of the pressure-equalizing container.

6. The process according to any of claims 1 to 5, wherein the pressure in the pelletizing chamber is in the range from 1 to 50 bar.

7. The process according to any of claims 1 to 6, wherein agglomerates and/or pellets arising during the pelletizing process whose size exceeds a prescribed maximum size are comminuted in a comminuting machine after leaving the pelletizing chamber.

8. An apparatus for pelletizing polymer melts comprising blowing agent, comprising a pelletizing chamber flooded with a liquid, its pressure being above the ambient pressure, and comprising a pressure pump for generating the required pressure, wherein at least one of the following features has been provided:
(a) downstream of a cutting apparatus within the pelletizing chamber there is a comminuting unit,
(c) downstream of the pelletizing chamber there is a pressure-equalizing container and, downstream of this, a throttle apparatus for adjusting the counterpressure, where the pellets are removed in a solids separator which is downstream of the throttle apparatus, where a pressure gas line and an exhaust gas line open into the pressure-equalizing container, the pressure gas line and the exhaust gas line in each case comprising a control valve, or the pressure gas line comprising a pressure-reduction valve and the exhaust gas lines comprising a pressure-retention valve, and the pressure in the pressure-equalizing container being kept in essence constant by way of these, and where a line with a shut-off valve branches off from the pressure gas line or from the pressure-equalizing container and opens into the pelletizing chamber or into the lines associated therewith.

9. The apparatus according to claim 8, wherein the solids separator is a hydrocyclone, a centrifuge, or a filter.

10. The apparatus according to claim 8, wherein the discharge of the solid from the solids separator of feature (c) takes place by way of a chamber sluice valve or rotary-vane sluice valve.

11. The apparatus according to claim 8, wherein the pressure-equalizing container comprises a separator apparatus for solids particles.

12. The apparatus according to claim 11, wherein the separator apparatus is a sieve insert.

13. The apparatus according to claim 11, wherein the separator apparatus comprises a cleansing apparatus and discharge apparatus.

## Revendications

1. Procédé de granulation de masses fondues polymères contenant un agent gonflant dans une chambre de granulation, qui est traversée par un liquide d'un circuit de liquide dont la pression se situe au-dessus de la pression ambiante, la chambre de granulation étant alimentée avec le liquide et, selon lequel, lors d'une première étape, la masse fondue polymère est introduite dans la chambre de granulation, lors d'une deuxième étape, la masse fondue polymère est découpée en grains de granulat individuels par un dispositif de découpe et, lors d'une troisième étape, les grains de granulat formés lors de la granulation sont déchargés avec le liquide de la chambre de granulation, puis séparés du liquide, le procédé comprenant également au moins une des étapes suivantes :
(a) le broyage des agglomérats ou grains de granulat formés lors de la granulation qui dépassent une taille maximale prescrite dans une machine de broyage connectée en aval de la chambre de granulation ou dans une unité de broyage connectée en aval du dispositif de découpe dans la chambre de granulation,
(c) la détente du liquide dans un dispositif d'étranglement au niveau de pression inférieur, un contenant de compensation de pression qui maintient essentiellement constants la pression et le débit dans la chambre de granulation étant connecté en amont du dispositif d'étranglement,
le dispositif d'étranglement utilisé à l'étape (c) pouvant également être une machine de détente ou un robinet d'étranglement, la machine de détente étant une écluse rotative ou comprenant au moins une turbine, et, pour le démarrage du procédé, la chambre de granulation étant alimentée en gaz à la pression du procédé par une conduite de compensation de pression connectée au contenant de compensation de pression.

2. Procédé selon la revendication 1, **caractérisé en ce que** la séparation des grains de granulat du liquide a lieu dans un séparateur de solides.

3. Procédé selon la revendication 2, **caractérisé en ce que** le séparateur de solides est un hydrocyclone, un filtre ou une centrifugeuse.

4. Procédé selon la revendication 1, **caractérisé en ce que** la pression dans le contenant de compensation de pression est maintenue constante par un gaz, un gaz sous pression étant introduit dans le contenant de compensation de pression pour augmenter la pression et du gaz étant soutiré du contenant de compensation de pression pour réduire la pression.

5. Procédé selon la revendication 4, **caractérisé en ce que** le niveau de liquide dans le contenant de compensation de pression est ajusté par le dispositif d'étranglement connecté en aval du contenant de compensation de pression.

6. Procédé selon l'une quelconque des revendications 1 à 5, **caractérisé en ce que** la pression dans la chambre de granulation se situe dans la plage allant de 1 à 50 bar.

7. Procédé selon l'une quelconque des revendications 1 à 6, **caractérisé en ce que** les agglomérats et/ou grains de granulat formés lors de la granulation, dont la taille dépasse une taille maximale prescrite, sont broyés dans une machine de broyage à la sortie de la chambre de granulation.

8. Dispositif de granulation de masses fondues polymères contenant un agent gonflant, comprenant une chambre de granulation alimentée avec un liquide dont la pression se situe au-dessus de la pression ambiante et une pompe de compression destinée à générer la pression nécessaire, **caractérisé en ce qu'**au moins une des caractéristiques suivantes est garantie :
(a) une unité de broyage est connectée en aval d'un dispositif de découpe dans la chambre de granulation,
(c) un contenant de compensation de pression, puis un dispositif d'étranglement pour ajuster la contre-pression sont connectés en aval de la chambre de granulation, la séparation du granulat ayant lieu dans un séparateur de solides qui est connecté en aval du dispositif d'étranglement, une conduite de gaz de compression et une conduite de gaz d'échappement débouchant dans le contenant de compensation de pression, la conduite de gaz de compression et la conduite de gaz d'échappement contenant chacune une vanne de régulation ou la conduite de gaz de compression contenant un manodétendeur et les conduites de gaz d'échappement contenant une vanne de rétention de la pression, qui maintiennent essentiellement constante la pression dans le contenant de compensation de pression, et une conduite munie d'une vanne d'arrêt, qui débouche dans la chambre de granulation ou les conduites reliées avec celle-ci, bifurquant à partir de la conduite de gaz de compression ou du contenant de compensation de pression.

9. Dispositif selon la revendication 8, **caractérisé en ce que** le séparateur de solides est un hydrocyclone, une centrifugeuse ou un filtre.

10. Dispositif selon la revendication 8, **caractérisé en ce que** le déchargement du solide du séparateur de solides de la caractéristique (c) a lieu par une écluse à sas ou une écluse rotative cellulaire.

11. Dispositif selon la revendication 8, **caractérisé en ce que** le contenant de compensation de pression contient un dispositif de séparation pour les particules solides.

12. Dispositif selon la revendication 11, **caractérisé en ce que** le dispositif de séparation est un insert de tamis.

13. Dispositif selon la revendication 11, **caractérisé en ce que** le dispositif de séparation contient un dispositif de purification et un dispositif de déchargement.
